# EUROPÄISCHE PATENTSCHRIFT

(11) **EP 0 788 637 B1**
(45) Veröffentlichungstag und Bekanntmachung des Hinweises auf die Patenterteilung: **22.12.1999**
(21) Anmeldenummer: 95935363.2
(22) Anmeldetag: 26.10.1995
(51) Int. Cl.: G06K 19/07

(54) **SYSTEM ZUR KONTAKTLOSEN ENERGIE- UND DATENÜBERTRAGUNG**
CONTACTLESS ENERGY AND DATA TRANSMISSION SYSTEM
SYSTEME POUR LA TRANSMISSION D'ENERGIE ET DE DONNEES SANS CONTACT

(30) Priorität: 26.10.1994 DE 4438286
(43) Veröffentlichungstag der Anmeldung: 13.08.1997
(73) Patentinhaber: SIEMENS AKTIENGESELLSCHAFT, 80333 München (DE)
(72) Erfinder: RYDVAL, Peter, D-81377 München (DE)
(86) Internationale Anmeldenummer: DE9501493
(87) Internationale Veröffentlichungsnummer: WO9613804

(56) Entgegenhaltungen:
- EP-A- 0 266 125
- EP-A- 0 297 688
- WO-A-93/23908
- US-A- 4 196 418

## Beschreibung

Die Erfindung betrifft ein System zur kontaktlosen Energieund Datenübertragung.

Derartige Systeme umfassen eine stationäre Station und einen Mobilteil, z. B. in Form einer Chipkarte, eines Chipschlüssels usw. Die stationäre Station liefert die für den Betrieb des Mobilteils notwendige Energie. Hierzu ist zumeist ein lose gekoppeltes Spülenpaar vorgesehen, bei dem jede Spule einem Schwingkreis im Mobil- bzw. stationären Teil zugeordnet ist. Zur Energieübertragung dient ein hochfrequentes Signal. Dieses wird im Mobil teil einer Gleichrichtereinheit und gegebenenfalls einer ihr nachgeschalteten Spannungsregeleinheit zugeführt. Aus der daraus gewonnenen Gleichspannung wird der Mobilteil mit Energie versorgt. Solche Systeme finden beispielsweise Anwendung in Erkennungssystemen, Wegfahrsperren, Chipkarten, Erkennungssystemen zur Kennzeichnung von Nutztieren usw.

Bei solchen Systemen mit kontaktloser Energieübertragung liegt der höchste Wirkungsgrad der Übertragung dann vor, wenn die Übertragungsfrequenz des Primärkreises der Resonanzfrequenz des Sekundärkreises entspricht. Der Primärkreis enthält beispielsweise den Schwingkreis des stationären Teils, der Sekundärkreis den des Mobilteils. Aufgrund von Parameterschwankungen der Bauteile und von außen eingekoppelten Störeinflüssen ist diese Anforderung nur innerhalb der Summe der Bauelementeparameter und sonstigen Einflußgrößen erreichbar. Um eine möglichst gute Signal- und Energieübertragung zu erreichen, ist ein Abgleich des Sekundärkreises notwendig.

In der Deutschen Patentschrift DE 38 10 702 C2 ist eine Einrichtung zur berührungslosen Signal- und Energieübertragung angegeben, bei der die stationäre Station einen abstimmbaren Schwingkreis enthält, der von einer Steuerschaltung angesteuert wird, um eine Abstimmung auf den Empfangskreis des mobilen Teils durchzuführen, so daß ein möglichst guter Empfang erreicht wird. Die stationäre Station enthält einen weiteren Schwingkreis. Die von den Schwingkreisen abgreifbaren Signale werden in bezug auf die relative Phasenlage zueinander ausgewertet. Davon abhängig werden in Reihe geschaltete Kapazitätsdioden gesteuert, die ihrerseits parallel zum abzustimmenden Schwingkreis der mobilen Station liegen.

In der WO 93/23908 ist ein System zur kontaktlosen Energie- und Datenübertragung zwischen einer Primärstation und mindestens einer mobilen Sekundärstation beschrieben, bei dem der Sekundärschwingkreis in der mobilen Station auf den Primärschwingkreis abgestimmt wird, indem Kapazitäten parallel schaltbar sind. Zur Einstellung der Abstimmung wird vorgeschlagen, aus der Empfangsfrequenz ein Spannungssignal abzuleiten, das mit einem Referenzsignal verglichen wird. Aus dem Vergleichsergebnis wird ein Schaltsignal zur wahlweisen Zuschaltung der Kapazitäten abgeleitet.

In der US 4 011 585 ist ein System zur Magnetbandaufzeichnung beschrieben, bei dem der Bias-Strom im Hinblick auf verschiedene Magnetbandmaterialien optimiert wird. Hierzu wird ein Referenzsignal aufgezeichnet und dabei der Bias-Aufzeichnungsstrom nach einer vorgegebenen Funktion variiert. In Abhängigkeit vom Wiedergabesignal wird der das Funktionssignal erzeugende Generator eingefroren, wenn das wiedergegebene Referenzsignal von einem Maximalwert auf einen vorgegebenen Schwellenwert abgesunken ist.

In der EP 0 266 125 A1 ist eine Schaltung zur Einstellung der Taktfrequenz eines Mikroprozessors beschrieben. Ein von einem Empfangsschwingkreis abgeleitetes Taktsignal dient zur Taktsteuerung eines Zählers. Bei Zählerüberlauf wird die Frequenz eines RC-Oszillators korrigiert.

In der EP 0 372 430 A2 ist ein Empfänger für einen Pager mit einer automatischen Empfangsabstimmung beschrieben. Ein Sequencer erzeugt Frequenzinkremente, durch die eine Antennenabstimmungsschaltung mit Varaktordioden gesteuert wird. Das Empfangsfrequenzband wird durchlaufen, wobei ein die Empfangs feldstärke angebendes Signal mit einem gespeicherten Wert verglichen wird. Ist die Empfangs feldstärke größer als der gespeicherte Wert, wird dieser mit der momentanen Empfangs feldstärke überschrieben. Gleichzeitig wird das zugeordnete Frequenzinkrement des Sequencers abgespeichert. Nach dem vollständigen Durchlauf des Empfangsfrequenzspektrums liegt beim zwischengespeicherten Frequenzinkrement maximale Empfangsfeldstärke vor.

Die Aufgabe der vorliegenden Erfindung besteht darin, ein System zur kontaktlosen Energie- und Datenübertragung anzugeben, bei dem ein Abgleich in möglichst einfacher Weise ausgeführt und realisiert werden kann.

Diese Aufgabe wird durch ein System mit den Merkmalen des Patentanspruchs 1 gelöst.

Vorteilhafte Weiterbildungen der Erfindung sind in den Unteransprüchen angegeben.

Durch das Vorsehen von an den Sekundärkreis zuschaltbaren Kapazitäten kann der Sekundärkreis in einfacher Weise auf eine möglichst hohe Signal- und Energieübertragung abgestimmt werden. Durch einen im Mobilteil enthaltenen Regelkreis kann die Abstimmung automatisch durchgeführt werden. Dies kann beispielsweise bei jedem Hochlauf des Systems während der Initialisierungsphase durchgeführt werden. Dadurch werden bei der Abstimmung auch die momentanen Umgebungsbedingungen berücksichtigt, durch die etwaige Störeinflüsse in die Kopplung zwischen Primär- und Sekundärschwingkreis einwirken können. Außerdem wird die Alterung der Bauelemente automatisch ausgeglichen. Der Abgleich kann auch bei kurzzeitigen Veränderungen, wie z. B. Betätigen einer Chipkarte, Initialisierung der Übertragung oder ähnlichem, ausgeführt werden. Die zu verwendenden Bauelemente können ohne weiteres in einer integrierten Steuerungsschaltung realisiert werden, so daß der Schaltungs- und Kostenaufwand relativ gering ist.

Nachfolgend wird die Erfindung anhand der in der Zeichnung dargestellten Figuren näher erläutert. Es zeigen:
- Figur 1: ein Prinzipschaltbild des Mobilteils des erfindungsgemäßen Systems,
- Figur 2: eine Prinziprealisierung für die Steuerungsschaltung des Mobilteils und
- Figur 3: eine schaltungstechnische Ausführungsform der Prinzipschaltung der Figur 2.

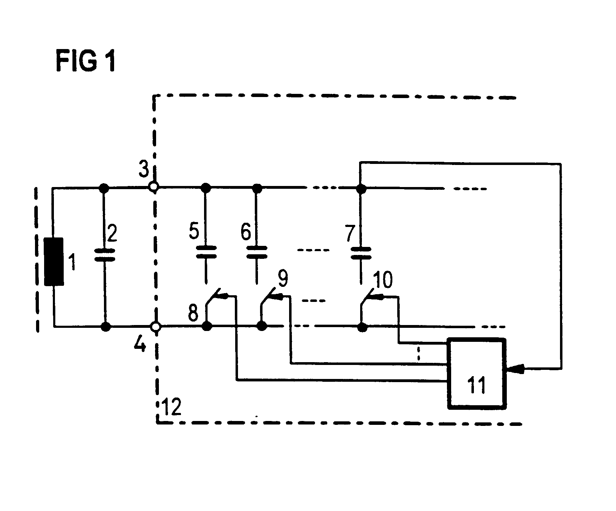

Der in Figur 1 gezeigte Mobilteil weist einen Parallelschwingkreis aus einer Induktivität 1 und einer Kapazität 2 auf. An den Anschlüssen 3, 4 des Schwingkreises 1, 2 ist eine integrierte Steuerungseinrichtung 12 angeschlossen. Die an den Anschlüssen 3, 4 abgreifbare Spannung wird in der integrierten Schaltung 12 gleichgerichtet, geglättet und eventuell geregelt, so daß die dann verfügbare Gleichspannung zur Versorgung der integrierten Schaltung 12 verwendet wird. Der Schwingkreis 1, 2 ist mit einem stationären (nicht dargestellten) Schwingkreis induktiv gekoppelt.

Parallel zum Schwingkreis 1, 2 sind Kapazitäten 5, 6, 7 mittels Schaltelementen 8, 9 bzw. 10 schaltbar. Die Schalter können als Transistoren ausgeführt werden. Die Schaltelemente 8...10 werden von Steuerungsmitteln 11 angesteuert. Die Mittel 11 sorgen dafür, daß die Resonanzfrequenz des Schwingkreises 1, 2 unter Hinzuschaltung von einer oder mehreren der Kapazitäten 5...7 derart verändert wird, daß eine möglichst gute Abstimmung auf den an der Spule 1 eingekoppelten Primärkreis erreicht wird. Hierzu wird die am Schwingkreis (Anschluß 3) abgreifbare Spannung in die Steuerungseinrichtung 11 eingekoppelt, so daß eine Ausregelung derart durchgeführt, daß ein möglichst hoher empfangener Spannungspegel erreicht wird.

Vorzugsweise ist die Resonanzfrequenz des Schwingkreises bereits derart eingestellt, daß eine Grobabstimmung vorliegt. Dies kann durch die Verwendung von Bauelementen mit entsprechender Güte erreicht werden oder dadurch, daß in einer Testeinrichtung bereits ein Vorabgleich durch Parallelschalten von einem oder mehreren der Kondensatoren 5...7 durchgeführt wird und die Schalteinstellung dauerhaft, z. B. in einem nicht-flüchtigen Speicher in der Steuerungseinrichtung 12, gespeichert wird. Mit der in Figur 1 gezeigten Regelung kann dann bei jedem Systemhochlauf ein automatischer Feinabgleich durchgeführt werden. Dabei werden auch die momentanen Betriebsbedingungen, wie z. B. äußere Störeinflüsse und Alterszustand der Bauelemente, automatisch berücksichtigt.

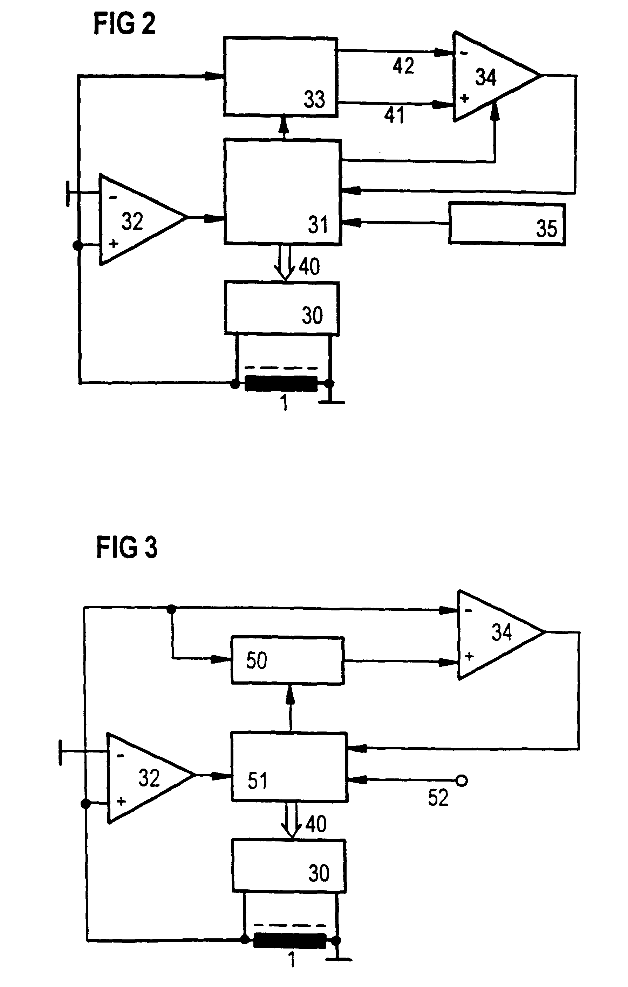

Eine prinzipielle Realisierung der Steuerungseinrichtung 11 ist in Figur 2 gezeigt. Parallel zur Induktivität des Schwingkreises 1 des Mobilteils ist vereinfacht dargestellt ein Kapazitätsnetzwerk 30 mit über eine Anzahl von Steuerungsleitungen 40 schaltbaren Kapazitäten gezeigt. Die Kapazitäten können jeweils verschiedene oder gleiche Kapazitätswerte aufweisen. Die Datenleitungen 40 werden von einer Steuerungseinrichtung 31 derart eingestellt, daß eine möglichst gute Abstimmung auf den Primärkreis vorliegt. Hierzu weist die Schaltung eine Einrichtung 33 auf, die die Funktion eines differentiellen Abtasthaltedetektors ausführt. Eingangsseitig wird der Einrichtung 33 die am Schwingkreis 1 abgreifbare Spannung zugeführt. Ausgangsseitig erzeugt die Einrichtung 33 am Anschluß 41 ein dem Momentanwert der Schwingkreisspannung entsprechendes Ausgangssignal und am Anschluß 42 ein dazu zeitversetztes Spannungssignal. Die Ausgänge 41, 42 sind mit den Eingängen eines Komparators 34 verbunden. Dieser stellt fest, ob der Momentanwert der Schwingkreisspannung höher oder niedriger als der zeitfrühere Spannungswert ist. Das entsprechende Ausgangssignal des Komparators 34 wird in die Steuerungseinrichtung 31 eingespeist. Die Steuerungseinrichtung 31 steuert den Abtastzeitpunkt des Komparators 34 und den Abtastzeitpunkt der Einrichtung 33. Die Einrichtung 31 kann algorithmisch gesteuert werden, wozu sich eine softwaregestützte Realisierung mittels eines Mikroprozessors anbietet. Es ist auch eine Realisierung mittels eines Zählers möglich, wie in Figur 3 gezeigt. Diese Realisierungsmöglichkeiten für die Einrichtung 31 setzen eine getaktete Betriebsweise voraus. Dieser Takt wird beispielsweise über einen Komparator 32 aus der Schwingkreisspannung abgeleitet und in die Einrichtung 31 eingespeist. Darüber hinaus ist eine Einrichtung 35 vorgesehen, die eine Zeitvorgabe an die Steuerungseinrichtung 31 übermittelt. Wenn beispielsweise eine von der Einrichtung 35 bestimmte Zeitdauer überschritten ist, wird der Steuerungsvorgang abgeschaltet. Sollten Betriebsbedingungen vorliegen, die kein exaktes Abstimmen ermöglichen, oder sollten fehlerhafte Funktionseinheiten vorliegen, dann wird der Abstimmvorgang nach Ablauf der Zeitvorgabe beendet, so daß das System betriebsbereit ist. Außerdem wird verhindert, daß bei Änderungen der Kopplung während des Normalbetriebs beispielsweise während einer Datenübertragung ein Abgleichvorgang eingeleitet wird. Dies könnte ansonsten zu einem Übertragungsfehler führen.

Eine schaltungstechnische Realisierung der in Figur 2 gezeigten Prinzipschaltung ist in Figur 3 angegeben. Gleiche Elemente sind dabei mit gleichen Bezugszeichen versehen. Als Steuerungselement ist hier ein Vorwärts-/Rückwärtszähler 51 vorgesehen. Dessen Ausgänge 40 bilden die Steuerleitung zur Ansteuerung des Kapazitätsnetzwerks 30. Wenn die Steuerleitungen 40 mit den Binärausgängen des Zählers 51 verbunden sind, werden die im Netzwerk 30 enthaltenen parallel zum Schwingkreis schaltbaren Kondensatoren zweckmäßigerweise in bezug auf ihre Kapazitätswerte binär abgestuft. Der Ausgang des Komparators 34 ist mit dem Vorwärts-/Rückwärtszähleingang des Zählers 51 verbunden. An einem Eingang 52 des Zählers 51 kann ein Freigabesignal eingespeist werden. Der Komparator 32 ist mit dem Takteingang des Zählers 51 verbunden.

Im konkreten Ausführungsbeispiel der Figur 3 ist der Plus-Eingang des Komparators 34 mit einem Abtasthalteglied 50 verbunden, an dem eingangsseitig das Spannungssignal des Schwingkreises eingespeist wird. Am Minus-Eingang des Komparators 34 liegt unmittelbar die Schwingkreisspannung. Im Komparator 34 wird nun der vom Abtasthalteglied 50 erzeugte Spitzenwert mit der momentanen Schwingkreisspannung verglichen. Zu Beginn des Abgleiches wird beispielsweise festgestellt werden, daß der durch das Abtasthalteglied 50 zugeführte Wert wegen der zu dessen Abtastzeitpunkt vorliegenden größeren Verstimmung niedriger liegt als der Momentanwert. Der Ausgang des Komparators führt dann eine logische "0", durch die der Zähler 51 zum Beispiel zum Hochzählen veranlaßt wird. Dadurch wird über die Steuerungsleitung 40 das Kapazitätsnetzwerk 30 derart verändert, daß die zur Spule 1 zuschaltbare Kapazität erhöht wird. Wird das Abstimmungsmaximum überschritten, ist der am Plus-Eingang des Komparators 34 anliegende Spannungspegel höher als der am Minus-Eingang anliegende. Der Ausgang des Komparators 34 schaltet dann auf logisch "1", so daß der Zähler zum Beispiel abwärts zählt. Bei einem Wechsel des Ausgangssignals des Komparators wird jeweils die Zählrichtung geändert. Somit wird das Kapazitätsnetzwerk 30 auf die bestmögliche Kopplung eingestellt. Über den Anschluß 52 kann dann der Abgleichvorgang eingefroren werden.

Die relative Auswertung der mindestens zwei zeitversetzten Signalpegel des vom Schwingkreis abgreifbaren Signals kann alternativ zu der oben beschriebenen Ausführung auch dadurch ausgeführt werden, daß dem Schwingkreis während des Ableichs ein zusätzlicher Kondensator wechselweise angeschaltet wird und wieder getrennt wird. Dadurch werden vom Schwingkreis Signale mit unterschiedlichen Spannungsamplituden abgegeben, die relativ zueinander ausgewertet werden können. Durch einen Vergleich der beiden Signalwerte in den beiden Schaltzuständen des zusätzlichen Kondensators kann eindeutig auf die notwendige Maßnahme zur Abstimmungsverbesserung rückgeschlossen werden. Wenn das Signal bei zugeschaltetem zusätzlichem Kondensator höher ist als bei weggeschaltetem Kondensator, muß ein weiterer Abstimmkondensator zur Verbesserung der Abstimmung zugeschaltet werden und umgekehrt. Durch Wiederholung dieses Vorgangs wird schließlich derjenige Abstimmungszustand erreicht, bei dem beide Auswertungszustände (mit und ohne angeschalteten zusätzlichen Kondensator) im wesentlichen das gleiche Ausgangssignal am Schwingkreis liefern. Eine weitere Verbesserung der Abstimmung wird dann dadurch erreicht, daß ein Abstimmkondensator mit dem halben Kapazitätswert des zusätzlichen Kondensators an den Schwingkreis geschaltet wird. Dieses Vorgehen ist insbesondere dann geeignet, wenn ein Modulationskondensator ohnehin vorhanden ist, durch den digitale Signalwerte auf einen Träger moduliert an die stationäre Station übertragen werden. Der Modulationskondensator wird dann vorzugsweise als der oben beschriebene zusätzliche Kondensator verwendet.

## Patentansprüche

1. System zur kontaktlosen Energie- und Datenübertragung zwischen einer ersten, mobilen und einer zweiten Station, bei dem
- die mobile Station einen abstimmbaren Schwingkreis (1, 2) aufweist, der von einer integrierbaren Steuerschaltung (12) angesteuert wird,
- die integrierbare Steuerschaltung (12) eine Vielzahl von parallel zum Schwingkreis (1, 2) mittels Schaltmitteln (8, 9, 10) zuschaltbare Kapazitäten (5, 6, 7) aufweist,
- durch eine Vergleichseinrichtung (33, 34) ein Vergleich zwischen zwei Signalpegeln, die am vom Schwingkreis (1, 2) abgreifbaren Signal zu unterschiedlichen vom Signal abgeleiteten Zeitpunkten abgetastet werden, durchführbar ist,
- die Zählrichtung einer Vorwärts-/Rückwärtszählanordnung (51) in Abhängigkeit von einem Ausgangssignal der Vergleichseinrichtung (34) steuerbar ist und
- die Schaltmittel (8, 9, 10) durch die Vorwärts-/Rückwärtszählanordnung (51) steuerbar sind.

2. System nach Anspruch 1,
**dadurch gekennzeichnet**, daß die Vorwarts-/Rückwärtszählanordnung ein Vorwärts-/Rückwärtszähler (51) ist, der durch das vom Schwingkreis (1, 2) abgreifbare Signal taktsteuerbar ist und daß ein Vorwärts-/Rückwärtssteuereingang des Vorwärts-/Rückwärtszählers (51) vom Ausgangssignal der Vergleichseinrichtung (34) steuerbar ist.

3. System nach Anspruch 1 oder 2
**dadurch gekennzeichnet,** daß die Vergleichseinrichtung (34) einen Komparator (34) enthält, von dem ein erster Eingang (-) durch das vom Schwingkreis abgreifbare Signal steuerbar ist und ein zweiter Eingang (+) durch das über ein Abtasthalteglied (50) geführte vom Schwingkreis (1, 2) abgreifbare Signal.

## Claims

1. System for contactless power and data transmission between a first, mobile station and a second station, in which system
- the mobile station has a tunable resonant circuit (1, 2) which is driven by an integrable control circuit (12),
- the integrable control circuit (12) has a multiplicity of capacitors (5, 6, 7), which can be connected in parallel with the resonant circuit (1, 2) by means of switching means (8, 9, 10),
- a comparison device (33, 34) can be used to carry out a comparison between two signal levels which are sampled, on the signal which can be picked off from the resonant circuit (1, 2), at different instants derived from the signal,
- the counting direction of an up/down counting arrangement (51) can be controlled in dependence on an output signal of the comparison device (34), and - the switching means (8, 9, 10) can be controlled by the up/down counting arrangement (51).

2. System according to Claim 1, characterized in that the up/down counting arrangement is an up/down counter (51), which can be clocked by the signal which can be picked off from the resonant circuit (1, 2), and in that an up/down control input of the up/down counter (51) can be controlled by the output signal of the comparison device (34).

3. System according to Claim 1 or 2, characterized in that the comparison device (34) contains a comparator (34), of which a first input (-) can be controlled by the signal which can be picked off from the resonant circuit, and a second input (+) can be controlled by the signal which can be picked off from the resonant circuit (1, 2) and is fed via a sample-and-hold element (50).

## Revendications

1. Système pour la transmission d'énergie et de données sans contact entre une première station mobile et une deuxième station, dans lequel
- la station mobile comporte un circuit oscillant (1, 2) accordable, qui est commandé par un circuit de commande (12) intégrable,
- le circuit de commande (12) intégrable comporte une pluralité de condensateurs (5, 6, 7) pouvant être raccordés en parallèle au circuit oscillant (1, 2) au moyen de dispositifs de commutation (8, 9, 10),
- un dispositif de comparaison (33, 34) permet d'effectuer une comparaison entre deux niveaux de signal, qui sont explorés sur le signal susceptible d'être prélevé sur le circuit oscillant (1, 2), à des instants différents déduits du signal,
- le sens de comptage d'un dispositif compteur/décompteur (51) peut être commandé en fonction d'un signal de sortie du dispositif de comparaison (34), et
- les dispositifs de commutation (8, 9, 10) peuvent être commandés par le dispositif compteur/décompteur (51).

2. Système selon la revendication 1, caractérisé en ce que le dispositif compteur/décompteur est un compteur/décompteur (51) dont le rythme peut être commandé par le signal susceptible d'être prélevé sur le circuit oscillateur (1, 2) et en ce qu'une entrée de commande du compteur/décompteur (51) peut être commandée par le signal de sortie du dispositif de comparaison (34).

3. Système selon la revendication 1 ou 2, caractérisé en ce que le dispositif de comparaison (34) comporte un comparateur (34) dont une première entrée (-) peut être commandée par le signal susceptible d'être prélevé sur le circuit oscillateur et une deuxième entrée (+) par le signal susceptible d'être prélevé sur le circuit oscillateur (1, 2) et guidé via un circuit d'exploration et de maintien (50).
